# FASCICULE DE BREVET EUROPEEN

(11) **EP 3 332 985 B1**
(45) Date de publication et mention de la délivrance du brevet: **11.09.2019**
(21) Numéro de dépôt: 17203995.0
(22) Date de dépôt: 28.11.2017
(51) Int. Cl.: B60B 3/02, B60B 25/08, B60B 25/20

(54) **ROUE D'AERONEF A TALON AMOVIBLE**
LUFTFAHRZEUGRAD MIT ABNEHMBAREM WULST
AN AIRCRAFT WHEEL WITH A REMOVABLE RIM FLANGE

(30) Priorité: 30.11.2016 FR 1661717
(43) Date de publication de la demande: 13.06.2018
(73) Titulaire: Safran Landing Systems, 78140 Vélizy-Villacoublay (FR)
(72) Inventeur: DELAYRE, Xavier, 78140 VELIZY-VILLACOUBLAY (FR)
(74) Mandataire: Lavialle, Bruno François Stéphane

(56) Documents cités:
- DE-A1- 3 630 226
- FR-A1- 3 015 951
- US-A1- 2007 227 639

## Description

### ARRIERE PLAN DE L'INVENTION

On connaît des jantes de roue d'aéronef comportant un moyeu relié par un voile à une portion externe annulaire destinée à recevoir un pneumatique. Cette portion externe annulaire comporte à ses deux extrémités des talons, dont l'un est amovible pour permettre le montage du pneumatique sur la roue. Le talon amovible est alors remis en place sur la jante avec interposition d'un jonc de blocage empêchant le talon amovible de se séparer de la jante. Il est apparu un besoin pour bloquer le talon amovible en rotation, afin d'éviter tout frettage entre le talon amovible et la jante.

On connaît du document FR3015951 une telle jante dont le talon amovible est arrêté en rotation à l'aide de deux biellettes montées symétriquement l'une par rapport à l'autre selon un angle oblique entre le talon amovible et la jante. Cependant, la fixation de ces biellettes sur la jante oblige à créer un orifice taraudé dans la jante pour recevoir une vis de fixation de la biellette.

### OBJET DE L'INVENTION

L'invention vise à proposer une roue d'aéronef à talon amovible munie de moyens de blocage en rotation du talon amovible ne nécessitant pas de développer une interface spécifique sur la jante pour fixer lesdits moyens de blocage en rotation.

### PRESENTATION DE L'INVENTION

En vue de la réalisation de ce but, on propose une jante de roue d'aéronef en alliage d'aluminium réalisée en deux parties dont une partie principale et une partie amovible, la partie principale comportant un moyeu, un voile s'étendant entre le moyeu et une portion externe annulaire destinée à recevoir un pneumatique et conformée pour présenter un talon à l'une de ses extrémités, l'autre de ses extrémités étant conformée pour recevoir la partie amovible formant talon amovible qui est rapportée sur la portion externe annulaire après mise en place du pneumatique, la jante comportant des moyens de blocage en rotation du talon amovible relativement à la jante. Selon l'invention, les moyens de blocage comportent au moins une clavette ayant une tête engagée dans un réceptacle conforme du talon amovible et un pied fixé à la partie principale de la jante au moyen d'au moins un pion en acier fretté dans la partie principale et s'étendant parallèlement à un axe de rotation de la roue pour saillir de la jante et recevoir le pied de la clavette.

De préférence, le pion est fretté dans un orifice de la jante qui sert par ailleurs à recevoir une extrémité d'une barrette d'entraînement en rotation de disques rotors de frein.

### PRESENTATION DES FIGURES

L'invention sera mieux comprise à la lumière de la description détaillée qui suit de modes particuliers et pas limitatifs de réalisation de l'invention, en référence aux figures des dessins annexés parmi lesquelles :
- La figure 1 est une vue en perspective d'une partie d'une jante d'aéronef selon un premier mode particulier de réalisation de l'invention;
- La figure 2 est une vue en coupe de la figure 1 au niveau de la clavette selon la ligne brisée B-B de la figure 1;
- La figure 3 est une vue de face partielle d'une jante d'aéronef selon un deuxième mode particulier de réalisation de l'invention;
- La figure 4 est une vue de face partielle d'une jante d'aéronef selon une variante de réalisation du deuxième mode de réalisation de l'invention;
- La figure 5 est une vue en coupe selon la ligne AA de la figure 4
- La figure 6 est une vue de face partielle d'une jante d'aéronef selon une autre variante du deuxième mode particulier de réalisation de l'invention;
- La figure 7 est une vue de face partielle d'une jante d'aéronef selon un troisième mode particulier de réalisation de l'invention;

### DESCRIPTION DE MODES DE REALISATION DE L'INVENTION

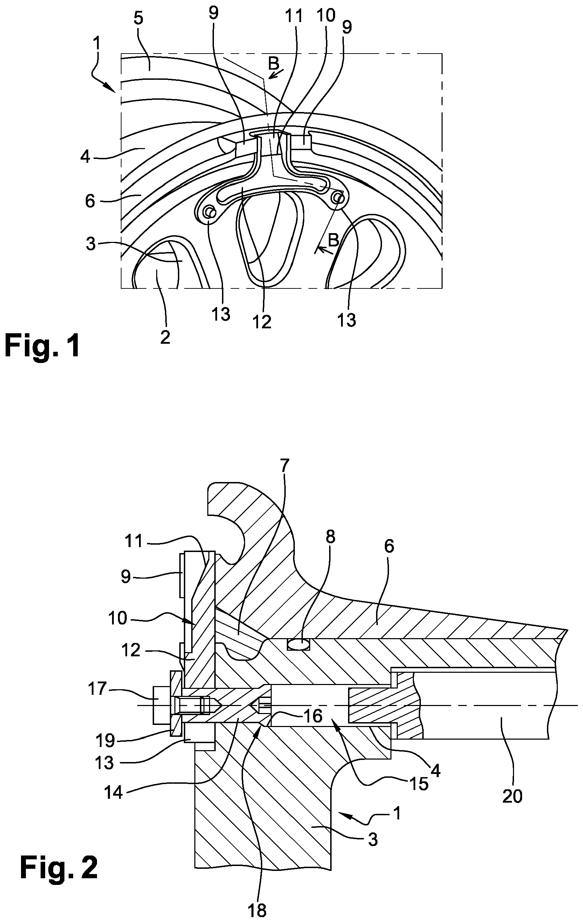

En référence aux figures 1 et 2, l'invention s'applique à une jante d'aéronef 1 comportant un moyeu 2 destiné à recevoir des roulements pour le guidage en rotation de la jante sur un essieu d'atterrisseur d'aéronef autour d'un axe de rotation. Le moyeu 2 est relié par un voile 3 dont on aperçoit les creux et les branches à une portion externe annulaire 4 destinée à recevoir un pneumatique (non représenté ici). La portion externe annulaire 4 est terminée à l'une de ses extrémités par un talon 5 venu de matière. L'ensemble forme la partie principale de la jante. Elle est complétée par une portion amovible, en l'occurrence un talon amovible 6 qui est rapporté sur l'autre extrémité de la portion externe annulaire et que l'on peut retirer pour permettre le montage d'un pneumatique. Le talon amovible 6 est rapporté sur la jante avec interposition d'un jonc 7 bloquant axialement le talon et empêchant son extraction sous l'effet de la pression du pneumatique. Un joint d'étanchéité 8 est interposé entre la jante 1 et le talon amovible 6 pour permettre le gonflage du pneumatique. La partie principale, que l'on nommera ici jante pour simplifier la description, et le talon amovible sont ici réalisés en alliage d'aluminium.

Selon l'invention, le talon amovible 6 est arrêté en rotation sur la jante 1 au moyen d'une clavette 10 ayant d'une part une tête 11 engagée dans un réceptacle du talon amovible 6 délimité latéralement par des butées 9, et d'autre part un pied 12 se terminant ici par deux oreilles 13 percées. Ici, les oreilles 13 sont enfilées sur des pions 14 en acier qui sont engagés dans des orifices 15 de la jante 1 débouchant qui s'étendent parallèlement à l'axe de rotation de la jante. Les pions 14 ont une extrémité interne évasée 16 qui vient en appui contre un épaulement 18 de l'orifice 15 pour son arrêt axial. Les pions 14 sont frettés dans l'extrémité des orifices 16 pour saillir de la jante 1 et recevoir les oreilles du pied de la clavette 10.

Ainsi positionnée, la clavette 10 s'oppose à toute rotation du talon amovible 6 sur la jante 1. Les clavettes 10 sont immobilisées au moyen de vis 17 vissées dans un taraudage du pion 14 et retenant une rondelle d'arrêt 19 qui immobilise axialement l'oreille 13 de la clavette 10 enfilée sur le pion 14 en laissant un léger jeu axial pour permettre à la clavette 10 un léger mouvement axial afin d'accommoder des jeux de montage ou des déformations du talon amovible 6.

Selon un aspect particulièrement avantageux, les orifices 16 servent par ailleurs à recevoir le doigt terminal d'une barrette 20 servant à entraîner en rotation avec la jante des disques rotors de frein (non représentés) qui s'étendent à l'intérieur de la jante. Ainsi, il suffit juste de prolonger l'orifice 16 pour le faire déboucher sur la face latérale de la jante, pour lui permettre de recevoir un pion fretté 14. Aucun orifice taraudé additionnel n'est à prévoir sur la jante pour fixer le pied de la clavette 10 sur la jante.

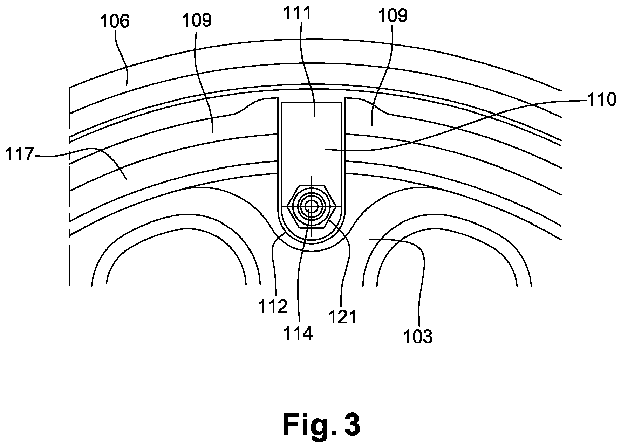

Selon un deuxième mode particulier de réalisation illustré à la figure 3 sur laquelle les références des éléments similaires ont été augmentés d'une centaine, la clavette 110 comporte maintenant un pied 112 droit percé s'enfilant directement sur l'un des pions frettés 114 saillant de la jante 101. Ici l'extrémité du pion 114 a été filetée pour recevoir un écrou 121 d'arrêt axial de la clavette 110.

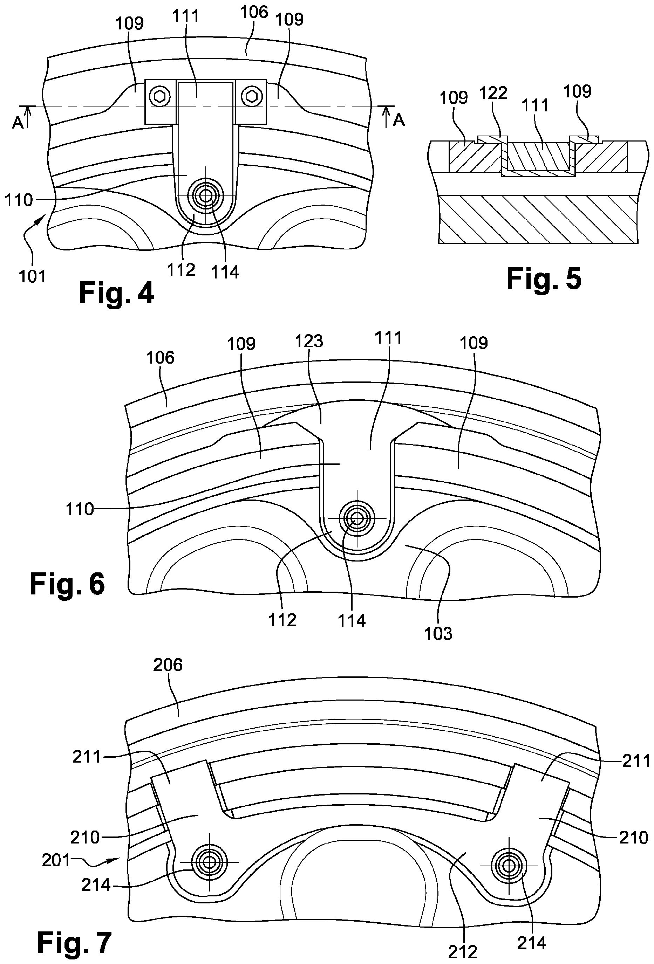

Selon une première variante représentée aux figures 4 et 5, on interpose entre les butées 109 du réceptacle du talon amovible 106 un insert en bronze 122 qui s'étend entre la tête 111 de la clavette 110 et les butées 109 pour protéger celle-ci contre le matage.

Selon une deuxième variante représentée à la figure 6, la clavette 110 comporte une tête 111 munie d'un chapeau 123 qui vient coiffer le dessus des butées 109 afin d'obtenir un effet auto-serrant entre la clavette fixée au pion 114 et le talon amovible 106 au cas où celui-ci aurait tendance à tourner relativement à la jante.

Selon enfin un troisième mode particulier de réalisation illustré à la figure 7 sur laquelle les références des éléments similaires ont été encore augmentés d'une centaine, les clavettes 210, qui comportent chacune des têtes 211 coopérant avec le talon amovible 206, sont ici groupées par paires, chacune des paires partageant un pied commun 212 qui est rapporté sur deux pions 214.

L'invention n'est pas limitée à ce qui vient d'être décrit mais englobe au contraire toute variante entrant dans le cadre défini par les revendications.

En particulier, bien qu'on ait indiqué que les pions 14,114,214 soient de préférence positionnés et frettés dans les orifices qui par ailleurs reçoivent les barrettes d'entraînement en rotation des disques rotors des freins, il est bien entendu possible, notamment si la jante n'est pas destinée à équiper une roue freinée, de prévoir des orifices spécifiques usinés dans la jante pour recevoir les pions.

On pourra bien entendu prévoir plusieurs clavettes pour arrêter le talon amovible en rotation, par exemple trois clavettes disposées à 120 degrés l'une de l'autre.

## Revendications

1. Jante (1;101;201) de roue d'aéronef en alliage d'aluminium réalisée en deux parties dont une partie principale et une partie amovible, la partie principale comportant un moyeu (2), un voile (3) s'étendant entre le moyeu et une portion externe annulaire (4) destinée à recevoir un pneumatique et conformée pour présenter un talon (5) à l'une de ses extrémités, l'autre de ses extrémités étant conformée pour recevoir la partie amovible (6) formant talon amovible qui est rapporté sur la portion externe annulaire après mise en place du pneumatique, la jante comportant des moyens de blocage (10;110;210) en rotation du talon amovible relativement à la jante, **caractérisé en ce que** les moyens de blocage comportent au moins une clavette (10;110;210) ayant une tête (11 ;111 ;211) engagée dans un réceptacle conforme du talon amovible et un pied (12;112;212) fixé au moyen d'au moins un pion (14;114;214) en acier fretté dans la jante et s'étendant parallèlement à un axe de rotation de la roue pour saillir de la jante et recevoir le pied de la clavette.

2. Jante selon la revendication 1, dans laquelle le pion (14) est engagé dans un orifice (15) de la jante s'étendant parallèlement à un axe de rotation de la jante.

3. Jante selon la revendication 2, équipée de barrettes (20) d'entraînement en rotation de disques rotors de freins, chaque barrette ayant un doigt d'extrémité engagé dans l'un des orifices (15) recevant l'un des pions (14).

4. Jante selon la revendication 1, dans lequel le pied (12) de la clavette s'étend pour présenter deux oreilles (13) chacune engagée sur un pion (14).

5. Jante selon la revendication 1, dans lequel le pied (112) de la clavette est engagé sur un pion (114).

6. Jante selon la revendication 1, dans lequel un insert en bronze (122) est interposé entre la tête (111) de la clavette et le réceptacle du talon amovible (106).

7. Jante selon la revendication 1, dans lequel la tête (111) de la clavette (110) comporte un chapeau (123).

8. Jante selon la revendication 1, dans lequel les clavettes (210) sont groupées par paires, chaque paire comportant un pied commun (211) engagé sur deux pions (214) .

## Patentansprüche

1. Luftfahrzeugrad-Felge (1; 101; 201) aus einer Aluminiumlegierung, wobei die Felge in zwei Teilen hergestellt ist, darunter ein Hauptteil und ein abnehmbarer Teil, wobei der Hauptteil eine Nabe (2) und eine Radscheibe (3) umfasst, die sich zwischen der Nabe und einem ringförmigen äußeren Abschnitt (4) erstreckt, der dazu bestimmt ist, einen Reifen aufzunehmen, und der so geformt ist, dass er an einem seiner Enden einen Wulst (5) aufweist, wobei das andere seiner Enden so geformt ist, dass es den abnehmbaren Teil (6) aufnimmt, der einen abnehmbaren Wulst bildet, der nach dem Anbringen des Reifens an dem ringförmigen äußeren Abschnitt befestigt wird, wobei die Felge Blockiermittel (10; 110; 210) zur Drehblockierung des abnehmbaren Wulstes relativ zu der Felge umfasst, **dadurch gekennzeichnet, dass** die Blockiermittel mindestens einen Keil (10; 110; 210) umfassen, der einen Kopf (11;111; 211) hat, der mit einer konformen Aufnahme des abnehmbaren Wulstes in Eingriff steht, sowie einen Fuß (12; 112; 212), der mittels mindestens eines Stiftes (14; 114; 214) aus Stahl befestigt ist, der in die Felge geschrumpft ist und sich parallel zu einer Rotationsachse des Rades erstreckt, um von der Felge vorzustehen und den Fuß des Keils aufzunehmen.

2. Felge nach Anspruch 1, bei der der Stift (14) mit einer Öffnung (15) der Felge in Eingriff steht, die sich parallel zu einer Rotationsachse der Felge erstreckt.

3. Felge nach Anspruch 2, die mit Leisten (20) zum Drehantrieb von Rotorscheiben von Bremsen ausgestattet ist, wobei jede Leiste einen Endfinger hat, der mit einer der Öffnungen (15) in Eingriff steht, die einen der Stifte (14) aufnimmt.

4. Felge nach Anspruch 1, bei der sich der Fuß (12) des Keils so erstreckt, dass er zwei Flügel (13) aufweist, die jeweils auf einem Stift (14) in Eingriff stehen.

5. Felge nach Anspruch 1, bei der der Fuß (112) des Keils auf einem Stift (114) in Eingriff steht.

6. Felge nach Anspruch 1, bei der ein Bronzeeinsatz (122) zwischen dem Kopf (111) des Keils und der Aufnahme des abnehmbaren Wulstes (106) angeordnet ist.

7. Felge nach Anspruch 1, bei der der Kopf (111) des Keils (110) eine Kappe (123) umfasst.

8. Felge nach Anspruch 1, bei der die Keile (210) paarweise gruppiert sind, wobei jedes Paar einen gemeinsamen Fuß (211) umfasst, der auf zwei Stiften (214) in Eingriff steht.

## Claims

1. An aircraft wheel rim (1; 101; 201) made out of two portions of aluminum alloy, comprising a main portion and a removable portion, the main portion comprising a hub (2), a disk (3) extending between the hub and an annular outer portion (4) for receiving a tire and shaped to present a flange (5) at one of its sides, its other side being shaped to receive the removable portion (6) forming a removable flange that is fitted onto the annular outer portion after a tire has been put into place, the rim including blocking means (10; 110; 210) for blocking movement in rotation of the removable flange relative to the rim, the rim being **characterized in that** the blocking means comprise at least one key (10; 110; 210) having a head (11; 111; 211) engaged in a matching receptacle in the removable flange and a root (12; 112; 212) fastened by means of at least one steel peg (14; 114; 214) that is shrink fitted in the rim that extends parallel to an axis of rotation of the wheel in order to project from the rim and receive the root of the key.

2. Rim according to claim 1, wherein the peg (14) is engaged in an orifice (15) in the rim that extends parallel to an axis of rotation of the rim.

3. Rim according to claim 2, fitted with bars (20) for driving rotation of brake rotor disks, each bar having an end finger engaged in one of the orifices (15) receiving one of the pegs (14).

4. Rim according to claim 1, wherein the root (12) of the key extends to present two lugs (13), each engaged on a peg (14).

5. Rim according to claim 1, wherein the root (112) of the key is engaged on a peg (114).

6. Rim according to claim 1, wherein a bronze insert (122) is interposed between the head (111) of the key and the receptacle of the removable flange (106).

7. Rim according to claim 1, wherein the head (111) of the key (110) includes a cap (123).

8. Rim according to claim 1, wherein the keys (210) are grouped in pairs, each pair having a common root (112) engaged on two pegs (214).
